Europäisches Patentamt

European Patent Office

Office européen des brevets

(19)

(11) Publication number: **0 178 282 B1**

(12) ## EUROPEAN PATENT SPECIFICATION

(45) Date of publication of patent specification: **27.12.91**

(51) Int. Cl.⁵: **C08J 9/06**, C08J 5/18, C08L 23/12

(21) Application number: **85870136.0**

(22) Date of filing: **07.10.85**

(54) **Expanded polypropylene films and process for preparing them.**

(30) Priority: **08.10.84 LU 85577**

(43) Date of publication of application:
**16.04.86 Bulletin 86/16**

(45) Publication of the grant of the patent:
**27.12.91 Bulletin 91/52**

(84) Designated Contracting States:
**BE DE FR GB IT NL**

(56) References cited:
**DE-A- 2 251 759**
**FR-A- 2 532 652**
**GB-A- 1 202 835**

**JOURNAL OF POLYMER SCIENCE: POLYMER
LETTERS EDITION, vol. 21, 1983, pages
347-351, John Wiley & Sons Inc., New York,
US; "Heterogeneous necleation studies on
polypropylene"**

**CHEMICAL ABSTRACTS, vol. 101, no. 22, 26th
November 1984, page 42, abstract no.
193087u, Columbus, Ohio, US**

(73) Proprietor: **MONTEFINA S.A.**
**Zone Industrielle C**
**B-7181 Feluy(BE)**

(72) Inventor: **Bertrand, Jean-Noel M.**
**Clos Saint-Georges 2**
**B-1970 Wezembeek-Oppem.(BE)**

(74) Representative: **Detrait, Jean-Claude et al**
**FINA RESEARCH S.A. Zone Industrielle C**
**B-7181 Feluy(BE)**

Rank Xerox (UK) Business Services

## Description

The present invention relates to expanded polypropylene films, more particularly to expanded crystalline polypropylene films.

The present invention also relates to a process for preparing said films which are characterized by improved physical properties.

Expanded polypropylene offers numerous advantages over non expanded polypropylene. Thus, objects made of expanded polypropylene show a weight gain which may reach 20 to 25 %. Furthermore, printing on expanded polypropylene is easy, without having to resort to a pre-treatment of the surface to be printed.

However, expanded polypropylene films manufactured until now have some disadvantages. Thus, their mechanical strength, more particularly their tensile strength, is not very high. Moreover, the density of expanded polypropylene films is not always uniform, and it shows variations which may reach 10 % between two points.

These drawbacks limit the commercial development of expanded polypropylene films. It appears therefore that it is necessary to be able to dispose of expanded polypropylene films offering better qualities.

The present invention relates to expanded polypropylene films the mechanical properties of which are improved. It also relates to expanded polypropylene films having a high crystallization temperature. Another object of the invention is constituted by uniform density expanded crystalline polypropylene films. The expanded polypropylene films of the present invention are characterized by a uniform density d comprised between $4.33 \times 10^{-4}$ g.mm$^{-3}$ ($4.25 \times 10^{-6}$ N.mm$^{-3}$) and $6.63 \times 10^{-4}$ g.mm$^{-3}$ ($6.50 \times 10^{-6}$ N.mm$^{-3}$), a crystallization temperature comprised between 115 and 135° C, and an elastic modulus Me expressed in g'.mm$^{-2}$ such that the ratio Me / d is comprised between $1.6 \times 10^{8}$ and $2.0 \times 10^{8}$. Films according to the present invention are obtained from a composition which essentially comprises isotactic polypropylene, an agent which modified the speed of crystallization, a blowing agent, and optionally a nucleating agent which has an effect upon the expansion.

While the films of the present invention may be prepared from a copolymer of propylene and a minor amount of an alpha-olefin which may have up to 6 carbon atoms, it is preferable to use an isotactic homopolymer, the articles obtained from said homopolymer having better physical properties. In order to increase the number of crystallization nuclei in the polypropylene, an agent which increases the crystallization speed is introduced and dispersed in the polymer. This agent is generally used in an amount which may vary between 500 ppm and 5000 ppm, calculated on the weight of polymer. By way of examples of agents improving the crystallization speed, it may be cited dibenzilidene sorbitol, sodium bis(4-tert-butylphenol) phosphate, sodium benzoate, or even a mixture comprising (i) either a monocarboxylic aromatic acid or a polycarboxylic aliphatic acid and (ii) either a silicate or an alumino-silicate of a metal from Groups I or II of the Periodic Table. This type of crystallization agent is described in the European Patent Application n° 85968 filed in the name of the Applicant.

The blowing agent may be of the type generally used for the production of expanded polypropylene. By way of examples, it may be cited citric acid, mixtures of (i) citric acid and (ii) either an alkali metal or ammonium bicarbonate, azodicarbonamide, diazoaminobenzene, azo-bis-isobutyronitrile and like compounds. The blowing agent may comprise one or several additives as for instance an agent reducing its decomposition temperature. The amount of blowing agent to be used depends on the nature and on the desired density for the expanded propylene. Said amount is generally comprised between 0.2 and 0.7 part per 100 parts by weight of polymer, and it can easily be determined by those skilled in the art. However, it has been noticed that, with the same amount of blowing agent, the density of a film according to the present invention is lower than that of a similar material obtained from polypropylene which does not contain any agent improving the crystallization speed.

In order to reduce the mean size of the cells formed in the expanded polypropylene, it may be advantageous also to incorporate a nucleating agent into the polymer, said nucleating agent having an effect upon the expansion. Said agent generally consists of a finely divided solid inorganic material. Owing to said additive, the blowing agent forms cells which are finely and uniformly dispersed within the polymer.

The compositions may also contain the usual additives, as for instance dyes, fire-proofing agents, antioxidants, or antistatic agents.

These compositions allow to prepare, by means of usual processes well known to the skilled in the art, films of which the density generally is comprised between about $4.33 \times 10^{-4}$ g.mm$^{-3}$ ($4.25 \times 10^{-6}$ N.mm$^{-3}$) and $6.63 \times 10^{-4}$ g.mm$^{-3}$ ($6.50 \times 10^{-6}$ N.mm$^{-3}$), depending on the amount of blowing agent used. It has been noted that these films have a uniform density, variations between two points of the material not exceeding about 2 or 3%.

Expanded crystalline polypropylene films according to the invention are also characterized by a high crystallization rate, which results from a high crystallization speed. This property is determined by measuring the crystallization temperature, which is the temperature at which the crystallization speed is maximum. This measurement is carried out by using the so-called DSC method (differential scanning calorimetry). To this end, the material to be examined is heated up to about 180°C, after what it is left to cool down. At the beginning, calories are released regularly, then, when crystallization reappears, the amount of calories released increases. The temperature at which this release of calories is maximum is called crystallization temperature. The materials of the invention have a crystallization temperature of about 115° to 135°C, most often comprised between about 115°C and 130°C, which depends on the agent used to modify the speed of crystallization and on the cooling rate chosen.

Another particularly interesting property of the films of the invention is their mechanical strength. Comparative trials have in particular shown that said films have an elastic modulus at least 20% higher than that of films having the same density and obtained from polypropylene which does not contain an agent improving the speed of crystallization. This elastic modulus depends on the density of the film. Therefore, the films of the invention are characterized by the ratio between the elastic modulus of a film (expressed in $g'.mm^{-2}$) and its density (expressed in $g.mm^{-3}$). This ratio is generally comprised between $1.6 \times 10^8$ and $2.0 \times 10^8$. Likewise, tensile strength at 5% elongation and tensile strength at break are higher with the films of the invention. Using films having a density of the order of $4.6 \times 10^{-4}$ $g.mm^{-3}$ ($4.5 \times 10^{-6}$ $N.mm^{-3}$) to $4.8 \times 10^{-4}$ $g.mm^{-3}$ ($4.7 \times 10^{-6}$ $N.mm^{-3}$), such density being most frequent for these materials, the tensile strength of the film at 5% elongation is of the order of 1096 $g'.mm^{-2}$ (10.75 $N.mm^{-2}$) to 1147 $g'.mm^{-2}$ (11.25 $N.mm^{-2}$), while the tensile strength of break varies between 1121 $g'.mm^{-2}$ (11 $N.mm^{-2}$) to 1172 $g'.mm^{-2}$ (11.5 $N.mm^{-2}$).

These measurements have been carried out using ASTM D.882-A standard.

These features and characteristics of the films of the invention will stand out from the following examples which are meant to be illustrative and in no way limitative.

Example 1

Expanded polypropylene films have been prepared from polypropylene and 0.5 % by weight of a mixture of (i) 5 parts by weight of citric acid and (ii) 3 parts by weight of sodium bicarbonate as blowing agent.

Several grades of polypropylene have been used, namely :
- isotactic polypropylene, containing no agent improving the crystallization speed, called polypropylene P 1;
- polypropylene obtained by mixing P 1 with 0.3 % by weight of a mixture of (i) 1 part by weight of adipic acid and (ii) 3 parts by weight of zeolite A 4, this improved polypropylene being designated as P 2;
- polypropylene obtained by mixing P 1 with 0.3 % by weight of dibenzylidene sorbitol, this mixture being designated as P 3;
- polypropylene obtained by mixing P 1 with 0.3 % by weight of sodium bis(4-tert-butylphenol) phosphate, this mixture being designated as P 4.

Polypropylene P 1 is outside the scope of the present invention and is mentioned for comparative purposes.

The crystallization temperature of these different grades of polypropylene has been determined by heating them up to a temperature of 180°C, then leaving them to cool down. For some of them, the determination has been carried out at different cooling rates. The results obtained are reported in Table 1.

3

### Table 1

| Polypropylene grade | Cooling rate (°C/min) | Crystallization temperature (°C) |
|---|---|---|
| P1 | 20 | 103.7 |
|  | 10 | 108.2 |
|  | 5 | 112.1 |
| P2 | 20 | 122.1 |
|  | 10 | 127.4 |
|  | 5 | 130.7 |
| P3 | 20 | 115.8 |
| P4 | 20 | 122.7 |

Films having a thickness of about 0.2 mm have been prepared by the blown film technique. Various compositions have been used, each containing one of the above-mentioned polypropylenes P1 to P4, and the amount of blowing agent has been varied according to the grade of polypropylene used in order to obtain films having a density of $4.7 \times 10^{-4}$ g.mm$^{-3}$ ($4.61 \times 10^{-6}$ N.mm$^{-3}$).

The elastic modulus has been determined according to ASTM D.882-A. The tensile strength at 5% elongation, the tensile strength at break and the elongation at break have also been determined.

The results are reported in Table 2.

| Polypropylene grade | Density $10^{-4}$ g/mm$^3$ ($10^{-6}$ N/mm$^3$) | | Tensile strength at 5% elongation g'/mm$^2$ (N/mm$^2$) | | Tensile strength at break g'/mm$^2$ (N/mm$^2$) | | Elongation at break % | Ratio elastic modulus/density $10^8$ |
|---|---|---|---|---|---|---|---|---|
| P1 | 4.70 | (4.61) | 962 | (9.43) | 1020 | (10) | 18.5 | 1.39 |
| P2 | 4.70 | (4.61) | 1138 | (11.16) | 1162 | (11.40) | 16.0 | 1.86 |
| P3 | 4.70 | (4.61) | 1103 | (10.82) | 1120 | (10.98) | 16.5 | 1.71 |
| P4 | 4.70 | (4.61) | 1124 | (11.02) | 1175 | (11.52) | 15.5 | 1.92 |

Example 2

This example shows that, using the same amount of blowing agent, the density of expanded isotactic polypropylene films containing an agent which improves the crystallization speed is lower than that of similar films obtained from isotactic polypropylene which does not contain such agent.

To prepare these films, 0.4% azodicarbonamide have been used as blowing agent.

The results are reported in Table 3.

### Table 3

| Polypropylene grade | Density $10^{-4}$ g/mm$^3$ ($10^{-6}$ N/mm$^3$) | |
|---|---|---|
| P1 | 6.75 | (6.62) |
| P2 | 5.02 | (4.92) |
| P3 | 6.05 | (5.93) |
| P4 | 6.00 | (5.89) |

## Claims

1. Expanded polypropylene films, characterized by a uniform density $\underline{d}$ comprised between $4.33 \times 10^{-4}$ g.mm$^{-3}$ ($4.25 \times 10^{-6}$ N.mm$^{-3}$) and $6.63 \times 10^{-4}$ g.mm$^{-3}$ ($6.50 \times 10^{-6}$ N.mm$^{-3}$), a crystallization temperature comprised between 115 and 135°C, and an elastic modulus Me expressed in g'.mm$^{-2}$ such that the ratio $\underline{Me}$ / $\underline{d}$ is comprised between $1.6 \times 10^8$ and $2.0 \times 10^8$.

2. Films according to claim 1, characterized by a crystallization temperature comprised between 115 and 130°C.

3. Films according to any of claims 1 or 2, characterized by a density comprised between $4.6 \times 10^{-4}$ g.mm$^{-3}$ ($4.5 \times 10^{-6}$ N.mm$^{-3}$) and $4.8 \times 10^{-4}$ g.mm$^{-3}$ ($4.7 \times 10^{-6}$ N.mm$^{-3}$).

4. Films according to claim 3, characterized by a tensile strength at 5% elongation comprised between 1096 g'.mm$^{-2}$ (10.75 N.mm$^{-2}$) and 1147 g'.mm$^{-2}$ (11.25 N.mm$^{-2}$).

5. Films according to claim 3, characterized by a tensile strength at break comprised between 1121 g'.mm$^{-2}$ (11.0 N.mm$^{-2}$) and 1172 g'.mm$^{-2}$ (11.5 N.mm$^{-2}$).

6. Process for preparing an expanded polypropylene film according to claim 1, comprising extrusion of a polypropylene composition containing 0.05 - 0.5 percent by weight of crystallization speed improving agent and 0.2 - 0.7 part by weight of blowing agent by 100 parts by weight of polymer, in addition to optional usual additives and/or nucleating agent.

## Revendications

1. Films en polypropylène expansé, caractérisés par une densité uniforme d comprise entre $4,33.10^{-4}$ g.mm$^{-3}$ ($4,25.10^{-6}$ N.mm$^{-3}$) et $6,63.10^{-4}$ g.mm$^{-3}$ ($6,50.10^{-6}$ N.mm$^{-3}$), une température de cristallisation comprise entre 115°C et 135°C et un module d'élasticité Me exprimé en g'.mm$^{-2}$ tel que le rapport Me/d est compris entre $1,6.10^8$ et $2,0.10^8$.

2. Films selon la revendication 1, caractérisés par une température de cristallisation comprise entre 115°C et 130°C.

3. Films selon l'une quelconque des revendications 1 ou 2, caractérisés par une densité comprise entre 4,6.10⁻⁴ g.mm⁻³ (4,5.10⁻⁶ N.mm⁻³) et 4,8.10⁻⁴ g.mm⁻³ (4,7.10⁻⁶ N.mm⁻³).

4. Films selon la revendication 3, caractérisés par une résistance à la traction à 5% d'élongation comprise entre 1096 g'.mm⁻² (10,75 N.mm⁻²) et 1147 g'.mm⁻² (11,25 N.mm⁻²).

5. Films selon la revendication 3, caractérisés par une résistance à la traction à la rupture comprise entre 1121 g'.mm⁻² (11,0 N.mm⁻²) et 1172 g'.mm⁻² (11,5 N.mm⁻²).

6. Procédé de préparation d'un film en polypropylène expansé selon la revendication 1, comprenant l'extrusion d'une composition de polypropylène contenant de 0,05 à 0,5% en poids d'un agent améliorant la vitesse de cristallisation, de 0,2 à 0,7 partie en poids d'un agent gonflant pour 100 parties en poids de polymère en plus des éventuels additifs habituels et/ou d'un agent nucléant.

**Patentansprüche**

1. Expandierte Polypropylenfolien, gekennzeichnet durch eine gleichmäßige Dichte d, die zwischen $4,33 \times 10^{-4}$ g mm⁻³ ($4,25 \times 10^{-6}$ N mm⁻³) und $6,63 \times 10^{-4}$ g mm⁻³ ($6,50 \times 10^{-6}$ N mm⁻³) liegt, eine Kristallisationstemperatur, die zwischen 115 und 135°C liegt, und einen Elastizitätsmodul Me, ausgedrückt in g' mm⁻², so daß das Verhältnis Me/d zwischen $1,6 \times 10^8$ und $2,0 \times 10^8$ liegt.

2. Folien nach Anspruch 1, gekennzeichnet durch eine Kristallisationstemperatur, die zwischen 115 und 130°C liegt.

3. Folien nach einem der Ansprüche 1 oder 2, gekennzeichnet durch eine Dichte, die zwischen $4,6 \times 10^{-4}$ g mm⁻³ ($4,5 \times 10^{-6}$ N mm⁻³) und $4,8 \times 10^{-4}$ g mm⁻³ ($4,7 \times 10^{-6}$ N mm⁻³) liegt.

4. Folien nach Anspruch 3, gekennzeichnet durch eine Zugfestigkeit bei 5% Dehnung, die zwischen 1096 g' mm⁻² (10,75 N mm⁻²) und 1147 g' mm⁻² (11,25 N mm⁻²) liegt.

5. Folien nach Anspruch 3, gekennzeichnet durch eine Zugfestigkeit beim Bruch, die zwischen 1121 g' mm⁻² (11,0 N mm⁻²) und 1172 g' mm⁻² (11,5 N mm⁻²) liegt.

6. Verfahren zum Herstellen einer expandierten Polypropylenfolie nach Anspruch 1, beinhaltend das Extrudieren einer Polypropylenzusammensetzung, die 0,05-0,5 Gewichtsprozent eines Mittels zum Verbessern der Kristallisationsgeschwindigkeit und 0,2-0,7 Gewichtsteile eines Treibmittels auf 100 Gewichtsteile Polymer, zusätzlich zu wahlweisen üblichen Zusätzen und/oder einem Nukleierungsmittel, enthält.